# EUROPÄISCHE PATENTSCHRIFT

(11) **EP 2 835 766 B1**
(45) Veröffentlichungstag und Bekanntmachung des Hinweises auf die Patenterteilung: **05.10.2016**
(21) Anmeldenummer: 14189061.6
(22) Anmeldetag: 07.03.2007
(51) Int. Cl.: G06K 19/02, G07F 7/08, B42D 25/47

(54) **Mehrschichtaufbau für ein Identifikationsdokument**
Multilayer structure for an identification document
Structure multicouche pour un document d'identification

(30) Priorität: 09.03.2006 DE 102006011388; 09.08.2006 DE 102006037383
(43) Veröffentlichungstag der Anmeldung: 11.02.2015
(62) Teilanmeldung aus: 07711812.3
(73) Patentinhaber: Bundesdruckerei GmbH, 10969 Berlin (DE)
(72) Erfinder: Seijo-Bollin, Hans-Peter, 10245 Berlin (DE)
(74) Vertreter: Mammel und Maser

(56) Entgegenhaltungen:
- WO-A1-2005/088529
- WO-A1-2006/005396
- DE-A1-102004 008 840

## Beschreibung

Die Erfindung betrifft einen Mehrschichtaufbau für ein Identifikationsdokument.

Solche Identifikationsdokumente, wie beispielsweise Pässe, buchartige Personalausweise, Führerscheine, vorläufige Personaldokumente, Sicherheitsdokumente, Zugangsberechtigungen oder dergleichen, enthalten persönliche Daten. Deshalb besteht ein erhebliches Interesse daran, solche Identifikationsdokumente vor Fälschungen zu schützen und die Herstellung von Fälschungen technisch unmöglich oder zumindest unrentabel zu machen. Darüber hinaus soll eine leichte Überprüfbarkeit und Kontrollierbarkeit von solchen Identifikationsdokumenten ermöglicht sein.

Aus der EP 1 502 765 A1 ist ein Verfahren zur Herstellung eines Identifikationsdokumentes in Form eines Büchleins bekannt geworden, welches einen Umschlag umfasst, der an einem Rücken wie üblich gefalzt ist und in den mehrere Blätter in bekannter Weise eingebunden sind. Das Büchlein weist eine Datenseite auf, die einen Mehrschichtaufbau mit einem Datenträger und einer flexiblen Schicht aufweist. Der Datenträger umfasst beispielsweise einen Chip und eine Antenne und ist aus einer Kunststofffolie ausgebildet. Die flexible Schicht ist aus einer Kunststofffolie oder einem Gewebe hergestellt. Durch Laminieren des Gewebes auf beiden Seiten der Kunststofffolie wird die Kunststofffolie erweicht, um das Gewebe mit der Oberfläche des Datenträgers zu verbinden.

Aus der WO 2006/005396 A1 geht ein buchartiges Wertdokument mit einem elektronischen Datenträger in einem Deckel hervor. Die Antenne und der Datenspeicher des elektronischen Datenträgers sind in einem Kunststofflaminat im Deckel eingebettet. Zwischen dem vorderen und hinteren Deckel ist ein Rücken durch ein Vlies oder ein Gewebe gebildet. In dem Vlies ist die Leiterbahn der Antenne enthalten. Das Vlies erstreckt sich zwischen den beiden Kunststoffschichten des Kunststofflaminats zur Bildung des Deckels.

Aus der WO 2005/088529 A1 geht ein flacher Transponder und ein Verfahren zu seiner Herstellung hervor. Zwischen zwei Kunststoffschichten ist eine Antenne positioniert. In Öffnungen der Kunststoffschichten ist das Chipmodul positioniert. An jeder Außenseite der Kunststoffschicht ist jeweils eine Papierschicht aus steifer Qualität in Form eines gestrichenen Papiers aufgebracht. Diese nicht-schrumpfenden Papierschichten sind mit den Kunststofffolien verbacken, wodurch eine Lagestabilisierung der elektronischen Schaltung und des Kunststoffkerns erzielt ist.

Der Erfindung liegt die Aufgabe zugrunde, einen Mehrschichtaufbau für ein Identifikationsdokument vorzuschlagen, bei dem die Fälschungssicherheit erhöht wird, eine hohe Beanspruchung im täglichen Gebrauch über einen langen Zeitraum ermöglicht ist und vielseitig in Identifikationsdokumenten einsetzbar ist.

Die Aufgabe wird erfindungsgemäß durch einen Mehrschichtaufbau für ein Identifikationsdokument gelöst bei dem die Substratschicht im Randbereich auf einer Oberseite und/oder Unterseite aus einem thermoplastisch verarbeitbaren Polymer hergestellt ist und zumindest auf einer Seite der Substratschicht eine Faserschicht aufweist, die in den Randbereich der Substratschicht einlaminiert ist, dass das Transpondermodul teilweise in die Faserschicht hineinragt oder dass die Faserschicht eine Ausstanzung in dem Bereich hat, in welchem das Transpondermodul gegenüber dem Randbereich in die Substratschicht hervorsteht und dass eine Klebemittelschicht aufgebracht ist, in welcher ein über die Substratschicht hinausstehender Teil der Faserschicht zur Verankerung einlaminiert ist, und mit einer an der Klebemittelschicht anhaftende Deckschicht zur Substratschicht nicht lösbar und flexibel fixiert ist. Durch diese Anordnung wird ermöglicht, dass zwischen der Klebemittelschicht und der Substratschicht nicht nur die Adhäsion an den einander gegenüberliegenden Grenzflächen wirkt, sondern zusätzlich die Faserschicht sowohl in der Substratschicht als auch in Klebemittelschicht einlaminiert und verankert oder verklammert ist. Dadurch kann eine erhöhte Festigkeit bei einer gleichzeitig hohen Flexibilität erzielt werden. Die Klebemittelschicht kann wiederum mit einer Deckschicht vollflächig in Verbindung treten, so dass die Klebemittelschicht einen flexiblen Übergang zwischen einer Deckschicht und der Substratschicht mit einer hohen Verbundwirkung ermöglicht. Ein solcher Aufbau ist für eine ein- oder mehrschichtige Personalisierungsdatenseite sowie für eine Buchdecke oder Buchdeckeneinlage als auch für ein einseitig klebendes Etikett für ein Identifikationselement vorgesehen.

Beim erfindungsgemäßen Mehrschichtaufbau wird diese Faserverbundwirkung bevorzugt dadurch erzielt, dass die Klebemittelschicht beim Aufbringen auf die Faserschicht den über den Randbereich hinausstehenden Teil der Faserschicht umschließt und die Klebemittelschicht zumindest teilweise auf die Substratschicht durchdringt. Dabei ist die Klebemittelschicht in der Auftragsdicke und der Materialzusammensetzung auf die Faserschicht angepasst, so dass hohe Festigkeiten durch ein solches Eindringverhalten der Klebemittelschicht in die Faserschicht ermöglicht sind. Die Klebemittelschicht wird bevorzugt aus einem zähelastischen und vorzugsweise gut stoßdämpfenden Klebemittel gebildet. Beispielsweise können Jowacoll 780.00 oder Planatol AD 9823, jeweils mit Härter oder flexiblen PUR-Systemen als ZweiKomponenten-System oder Hotmelt-Kleber, verwendet werden.

Nach einer vorteilhaften Ausgestaltung der mehrschichtigen Buchdecke oder Personalisierungsdatenseite ist die Substratschicht aus einer einzigen Schicht, insbesondere einem thermoplastischen Polyurethan, hergestellt.

Zur Ausgestaltung einer Buchdecke ist vorteilhafterweise vorgesehen, dass eine Deckschicht als Vorsatz und eine gegenüberliegende Deckschicht als Buchdeckeneinband vorgesehen ist. Zur Ausgestaltung einer solchen Buchdecke besteht zumindest eine Schicht aus einem wenig verdichteten Material aus beispielsweise latexierter Cellulosefaser mit relativ vielen Lufteinschlüssen zur optimalen Dämpfung. Beispielsweise können Materialien wie Skivertex 12 pt oder Skivertex Ultra eingesetzt werden. Bei der Verwendung des Mehrschichtaufbaus als Personalisierungsdatenseite sind bevorzugt beide Deckschichten aus einem temperaturbeständigen Kunststoff, wie beispielsweise Polycarbonat, hergestellt.

Die Erfindung sowie weitere vorteilhafte Ausführungsformen und Weiterbildungen derselben werden im Folgenden anhand der in der Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine schematisch vergrößerte Darstellung eines Mehrschichtaufbaus mit einer Substratschicht und einer zum Teil einlaminierten Faserschicht,
Figur 2 eine schematische Darstellung eines Mehrschichtaufbaus für eine Buchdecke und
Figur 3 eine Ausgestaltung eines erfindungsgemäßen Mehrschichtaufbaus für eine Buchdecke
Figur 4 eine schematische Schnittdarstellung eines Mehrschichtaufbaus für eine Personalisierungsdatenseite oder eines Etikettes für ein Einlageblatt und
Figur 5 eine alternative Ausgestaltung zur Herstellung eines Mehrschichtaufbaus gemäß Figur 4.

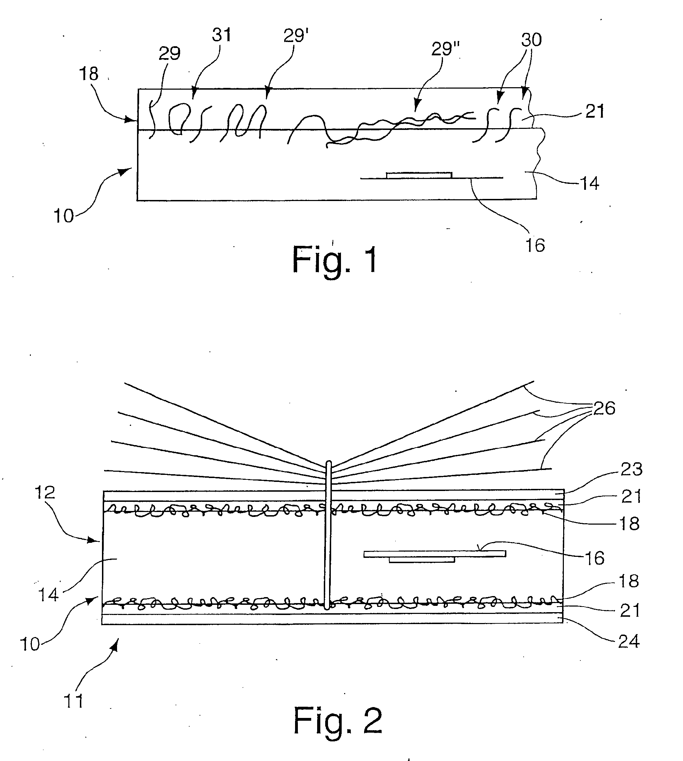

In Figur 1 ist ein Mehrschichtaufbau 10 für ein Identifikationsdokument 11, wie beispielsweise einen Reisepass oder dergleichen, dargestellt. Der Mehrschichtaufbau 10 umfasst eine Substratschicht 14. Diese Substratschicht 14 ist aus einem thermoplastisch verarbeitbaren Polymer hergestellt. Diese weist beispielsweise eine Schichtdicke zwischen 50 bis 500 µm auf. Bevorzugt ist in der Substratschicht 14 ein Transpondermodul 16 eingebettet. Die Substratschicht 14 weist im Randbereich auf einer Ober- oder Unterseite eine Faserschicht 18 auf. Diese Faserschicht 18 besteht beispielsweise aus einzelnen Fasern, die teilweise in die Substratschicht 14 einlaminiert sind. Ein Teil der Fasern steht gegenüber der Substratschicht 14 hervor. Die Faserschicht 18 kann als eine Anhäufung von einer Vielzahl von Einzelfasern ausgebildet sein. Ebenso kann ein Vlies oder Spinnvlies vorgesehen sein, welches teilweise einlaminiert ist. Dabei ist vorgesehen, dass die einzelnen Fasern auf der der Substratschicht 14 zugewandten Seite in diese eindringen beziehungsweise beim Herstellen teilweise einlaminiert sind und auf der anderen Seite eine gute Benetzbarkeit mit einem darauf aufbringbaren Klebemittel zur Ausbildung einer Klebemittelschicht 21 ermöglichen. Die Faserschicht 18 kann verschiedene oder gleiche Anordnungen und Ausgestaltungen der einzelnen Fasern 29 umfassen. Beispielsweise kann die Faserschicht 18 aus einzelnen Fasern 29 ausgebildet sein, die mit einem Ende in die Substratschicht 14 eingebettet oder darin verhakt sind und das freie Ende frei hervorsteht. Das freie Ende kann auch als Haken 30 oder als eine geschlossene Schlaufe 31 ausgebildet sein. Ebenso können Fasern 29 an längeren freien Enden vorgesehen sein, die wirr übereinander liegen oder zueinander angeordnet sind, bevor die Klebemittelschicht aufgetragen wird. Des Weiteren können Fasern 29 schlangenlinienförmig ausgebildet sein, wobei abwechselnd Abschnitte in- und außerhalb der Substratschicht liegen können. Durch diesen Mehrschichtaufbau 10 kann nach dem Aufbringen einer Klebemittelschicht 21 zur Aufnahme von weiteren Schichten, wie nachfolgend noch beschrieben sein wird, ermöglicht sein, dass sowohl die Klebemittelschicht 21 als auch die Substratschicht 14 im Wesentlichen im gleichen Maße durch die Fasern zueinander verankert werden, so dass neben der reinen Adhäsion der aneinander grenzenden Flächen ein zusätzlicher Verankerungseffekt erzielt wird. Dadurch wird die Faserverbundwirkung erhöht. Gleichzeitig kann die Flexibilität eines solchen Mehrschichtaufbaus 10 erhöht werden.

Eine besonders vorteilhafte Verbindung wird erzielt, wenn die Klebemittelschicht 21 eine chemische Bindung zur Substratschicht 14 und/oder Faserschicht 18 beziehungsweise Vliesschicht aufbaut.

Die vorbeschriebenen Ausführungsformen ermöglichen zusammen mit der Klebemittelschicht 21 einen flexiblen und nicht lösbaren Verbund.

In Figur 2 ist eine schematische Schnittdarstellung eines Mehrschichtaufbaus 10 zur Ausbildung einer flexiblen Buchdecke 12 für ein Passbuch dargestellt. Bei dieser Ausführungsform umfasst der Mehrschichtaufbau 10 auf jeder Seite der Substratschicht 14 eine Faserschicht 18, um eine Faserverbundwirkung zum Vorsatz 23 und Einbandmaterial 24 zu bilden.

Bevor das Einbandmaterial 24 auf die freie Faserschicht 18 der Substratschicht 14 aufkaschiert wird, werden Einlageblätter 26 beziehungsweise Datenseiten 26 und gegebenenfalls eine Personalisierungsdatenseite mit einer Buchdeckeneinlage vernäht. Diese Buchdeckeneinlage besteht beispielsweise aus der Substratschicht 14 und das Vorsatz 23. Das Vorsatz 23 und/oder die Substratschicht 14 können bevorzugt mit mehreren Einlageblättern 26 und gegebenenfalls einer Personalisierungsdatenseite vernäht sein. Nach dem Einnähen der Datenseiten wird ein Buchdeckeneinbandmaterial 24 aufkaschiert, der insbesondere einen Randbereich des Vorsatzes 23 übergreift. Das Vorsatz kann aus Papier, einer Folie oder einer Kombination eines ein- oder mehrschichtigen Verbundes oder aus einem oder mehreren Materialien bestehen.

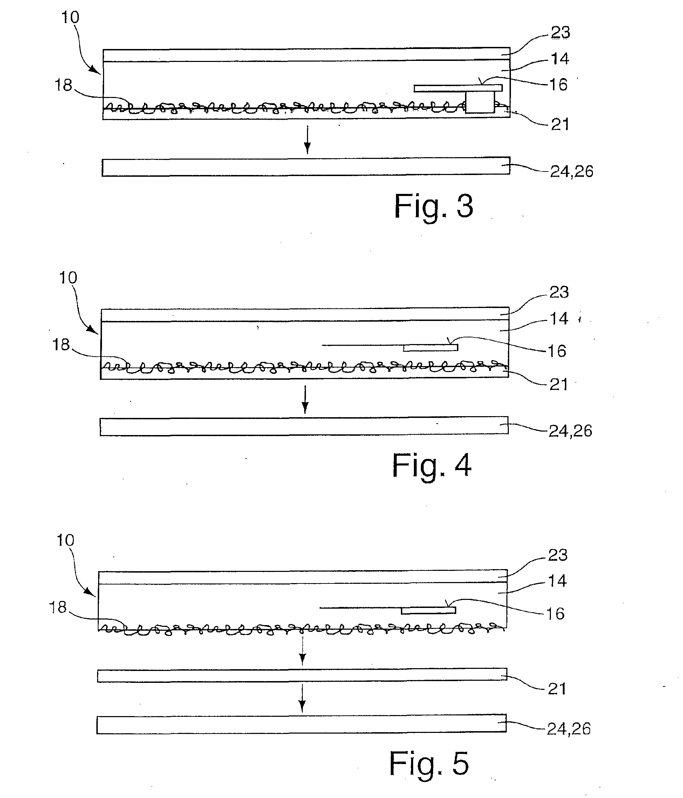

In Figur 3 ist ein erfindungsgemäße r Mehrschichtaufbau 10 für eine flexible Buchdecke 12 oder eine Personalisierungsdatenseite oder einen e-Sticker als Visasticker dargestellt. Bei dieser Ausführungsform ist die Faserschicht 18 nur einseitig in die Substratschicht 14 eingebracht. Auf der gegenüberliegenden Seite der Substratschicht 14 ist beispielsweise ein Sicherheitspapier oder das Vorsatz 23 unmittelbar auf die Substratschicht 14 aufgebracht. Bei dieser Ausführungsform ragt das Transpondermodul 16 über die Substratschicht 14 hinaus, kann aber auch mit der Schicht 14 abschließen oder hinter ihr zurückbleiben (nicht gezeigt). Die Faserschicht 18 ist dabei derart ausgestaltet, dass diese eine Ausstanzung für das Transpondermodul aufweist, so dass eine Klebemittelschicht 21 unmittelbar an dem Transpondermodul 16 angreift. Alternativ kann vorgesehen sein, dass das Transpondermodul 16 bis in den Randbereich der Substratschicht 14 sich erstreckt und von der Faserschicht 18 überdeckt wird. Nach dem Aufbringen der Klebemittelschicht 21 wird das Einbandmaterial 24 aufgebracht, um die Buchdecke 12 fertigzustellen oder ein oder mehrere Einlageblätter 26 aufgebracht, um eine Personalisierungsdatenseite oder einen e-Sticker fertigzustellen.

Diese Ausführungsform gemäß Figur 3 kann auch dahingehend abgewandelt werden, dass eine Faserschicht 18 nur zwischen dem Vorsatz 23 und der Substratschicht 14 vorgesehen ist.

In Figur 4 ist eine schematische Schnittdarstellung eines Mehrschichtaufbaus 10 als Personalisierungsdatenseite oder als Visasticker dargestellt. Der Mehrschichtaufbau 10 gemäß Figur 1 wird auf eine Personalisierungsdatenseite aufgeklebt und mit dieser verbunden. Dieser Verbund kann zusätzlich noch mit einer Deckschicht versehen sein, die aus einem vorzugsweise temperaturbeständigen Material besteht, die Personalisierungsdatenseite bevorzugt vollständig umschließt und gegebenenfalls noch einen Überstand zum Einnähen oder Befestigen in einem Passbuch aufweist. Alternativ oder zusätzlich kann auch ein Einlageblatt 26 als Deckschicht aufgebracht werden. Die vorbeschriebenen Varianten bezüglich der Anordnung und Anzahl der Faserschichten 18 als auch des Transpondermoduls 16 in und zur Substratschicht 14 gelten auch für die vorliegende Ausführungsform. Bei dieser Ausführungsform ist beispielsweise vorgesehen, dass die Klebemittelschicht 21 zunächst auf das Faservlies aufgebracht wird, bevor die Personalisierungsdatenseite aufkaschiert wird.

Eine alternative Verfahrensweise zur Herstellung einer solchen Personalisierungsdatenseite ist in Figur 5 dargestellt. Die Klebemittelschicht 21 kann als separate Klebefolie bereitgestellt werden. Somit können manuelle Einzelanfertigungen ermöglicht werden. Dies ist besonders vorteilhaft bei der Herstellung von sogenannten Visastickern beziehungsweise einseitigen Klebeetiketten. Diese alternative Ausführungsform gilt ebenso für die Ausführungsform gemäß den Figuren 2 und 3.

Der erfindungsgemäße Mehrschichtaufbau 10 ermöglicht somit den Einsatz für eine Buchdeckeneinlage, einen Bucheinband für eine Personalisierungsdatenseite als auch ein Klebeetikett zum Einbringen in oder auf ein Identifikationsdokument.

Alle vorbeschriebenen Merkmale sind jeweils für sich erfindungswesentlich und können beliebig miteinander kombiniert werden, wobei die Erfindung durch die Ansprüche definiert wird.

## Patentansprüche

1. Mehrschichtaufbau (10) für ein Identifikationsdokument (11) bestehend aus einer ein- oder mehrschichtigen Substratschicht (14), in welcher ein Transpondermodul vorgesehen ist, die auf einer oder beiden Seiten der Substratschicht (14) zumindest eine weitere Schicht aufweist, **dadurch gekennzeichnet, dass** die Substratschicht (14) im Randbereich auf einer Oberseite und/oder Unterseite aus einem thermoplastisch verarbeitbaren Polymer hergestellt ist und zumindest auf einer Seite der Substratschicht (14) eine Faserschicht (18) aufweist, die in den Randbereich der Substratschicht (14) einlaminiert ist, dass das Transpondermodul teilweise in die Faserschicht (18) hineinragt oder dass die Faserschicht (18) eine Ausstanzung in dem Bereich hat, in welchem das Transpondermodul gegenüber dem Randbereich in die Substratschicht (14) hervorsteht und dass eine Klebemittelschicht (21) aufgebracht ist, in welcher ein über die Substratschicht (14) hinausstehender Teil der Faserschicht (18) zur Verankerung einlaminiert ist, und mit einer an der Klebemittelschicht (21) anhaftende Deckschicht (23, 24, 26) zur Substratschicht (14) nicht lösbar und flexibel fixiert ist.

2. Mehrschichtaufbau nach Anspruch 1, **dadurch gekennzeichnet, dass** die Substratschicht (14) aus einer einzigen Schicht, insbesondere aus thermoplastischem Polyurethan (TPU), hergestellt ist.

3. Mehrschichtaufbau nach einem der vorhergehenden Ansprüche, **dadurch gekennzeichnet, dass** zur Ausbildung als Buchdeckeneinlage eine Deckschicht das Vorsatz (23) bildet oder dass zur Ausbildung als einseitig klebendes Etiketts auf einer mit der Klebemittelschicht (21) versehenen Seite der Substratschicht (14) eine abziehbare Schutzfolie vorgesehen ist.

4. Mehrschichtaufbau nach einem der vorhergehenden Ansprüche, **dadurch gekennzeichnet, dass** zur Ausbildung als Personalisierungsdatenseite auf beiden Seiten der Substratschicht (14) eine Deckschicht (23, 24, 26) mit einer Klebemittelschicht (21), die den freien Teil der Faserschicht (18) zumindest umschließt, zur Substratschicht (14) fixiert ist.

5. Mehrschichtaufbau nach Anspruch 4, **dadurch gekennzeichnet, dass** eine der Deckschichten (23, 24, 26) aus einem temperaturstabilen Kunststoff, insbesondere Polycarbonat, ausgebildet ist oder dass eine der beiden Deckschichten (23, 24, 26) aus einem Sicherheitspapier hergestellt ist.

6. Mehrschichtaufbau nach einem der vorhergehenden Ansprüche, **dadurch gekennzeichnet, dass** als thermoplastisch verarbeitbares Polymer thermoplastische Elastomere, vorzugsweise thermoplastisches Polyurethan (TPU) oder Mischungen mit überwiegendem Bestandteil an thermoplastischem Polyurethan (TPU), oder Thermoplaste, vorzugsweise Polypropylen, Polyethylen, Polyamid, Polyvinylchlorid, Polyethylenterephthalat oder Mischungen davon, vorgesehen sind.

## Claims

1. A multilayer structure (10) for an identification document (11) consisting of a one-layered or multi-layered substrate layer (14) into which a transponder module is entirely embedded and which on one side or on both sides thereof has at least one further layer, **characterised in that** the substrate layer (14) in its edge region on an upper side and/or lower side is made of a polymer capable of being processed by thermoplastic methods and is provided, at least on one side of the substrate layer (14), with a fibrous layer (18) which is laminated into the edge region of the substrate layer (14), **in that** the transponder module partially extends into the fibrous layer (18) or **in that** the fibrous layer (18) has a cutout in the region, in which the transponder module with respect to the edge region protrudes in the substrate layer (14), and **in that** an adhesive layer (21) is applied into which a part of the fibrous layer (18) protruding from the substrate layer (14) is laminated for anchoring purposes and is fixed, by means of a covering layer (23, 24, 26) adhering to the adhesive layer (21), with respect to the substrate layer (14) in a non-detachable and flexible manner.

2. The multilayer structure as claimed in claim 1, **characterised in that** the substrate layer (14) is fabricated of a single layer, in particular made of thermoplastic polyurethane (TPU).

3. The multilayer structure as claimed in any of the preceding claims, **characterised in that** for the realisation of a case insert, a covering layer forms the end paper (23), or **in that** for the realisation of a label adhesive on one side, a peelable protective film is provided on a side of the substrate layer (14) that has the adhesive layer (21) applied thereon.

4. The multilayer structure as claimed in any of the preceding claims, **characterised in that** for the realisation of a personalisation data page, a covering layer (23, 24, 26) is fixed on both sides of the substrate layer (14) with respect to the substrate layer (14) by means of an adhesive layer (21) surrounding at least the free part of the fibrous layer (18).

5. The multilayer structure as claimed in claim 4, **characterised in that** one of the covering layers (23, 24, 26) is formed of a thermally stable plastic material, in particular polycarbonate, or in that one of the two covering layers (23, 24, 26) is made of a security paper.

6. The multilayer structure as claimed in any of the preceding claims, **characterised in that** the polymer capable of being processed by thermoplastic means is intended to include thermoplastic elastomers, preferably thermoplastic polyurethane (TPU) or mixtures with predominant parts of thermoplastic polyurethane (TPU), or thermoplastics, preferably polypropylene, polyethylene, polyamide, polyvinyl chloride, polyethylene terephthalate or mixtures thereof.

## Revendications

1. Structure multicouche (10) pour un document d'identification (11) composée d'une couche de substrat (14) monocouche ou multicouche dans laquelle un module transpondeur est entièrement noyé, laquelle présente sur une face ou sur les deux faces de la couche de substrat (14) au moins une autre couche, **caractérisée en ce que** la couche de substrat (14) est réalisée dans la zone périphérique sur une face supérieure et/ou une face inférieure en un polymère usinable de manière thermoplastique et présente au moins sur une face de la couche de substrat (14) une couche de fibres (18) qui est laminée dans la zone périphérique de la couche de substrat (14), **en ce qu'**une le module transpondeur partiellement avance dans la couche de fibres (18) ou **en ce que** la couche de fibres (18) a une découpe dans la zone dans laquelle le module transpondeur par rapport à la zone périphérique dépasse de la couche de substrat (14), et **en ce qu'**une couche de substance adhésive (21) est appliquée dans laquelle une partie de la couche de fibres (18) dépassant de la couche de substrat (14) est laminée pour l'ancrage, et est fixée, à l'aide d'une couche de recouvrement (23, 24, 26) adhérant à la couche de substance adhésive (21), de manière indétachable et flexible par rapport à la couche de substrat (14).

2. Structure multicouche selon la revendication 1, **caractérisée en ce que** la couche de substrat (14) est réalisée en une seule couche, en particulier en polyuréthane thermoplastique (TPU).

3. Structure multicouche selon l'une quelconque des revendications précédentes, **caractérisée en ce que** pour la réalisation sous forme de papier couverture de livret, une couche de recouvrement forme la page de garde (23) ou **en ce que** pour la réalisation sous forme d'étiquette adhésive sur une face, un film protecteur pelable est prévu sur une face de la couche de substrat (14) pourvue de la couche de substance adhésive (21).

4. Structure multicouche selon l'une quelconque des revendications précédentes, **caractérisée en ce que** pour la réalisation sous forme de page de données de personnalisation, une couche de recouvrement (23, 24, 26) est fixée sur les deux faces de la couche de substrat (14) par rapport à la couche de substrat (14) grâce à une couche de substance adhésive (21) qui enveloppe au moins la partie libre de la couche de fibres (18).

5. Structure multicouche selon la revendication 4, **caractérisée en ce qu'**une des couches de recouvrement (23, 24, 26) est réalisée en une matière plastique thermostable, en particulier en polycarbonate, ou **en ce qu'**une des deux couches de recouvrement (23, 24, 26) est réalisée en un papier de sécurité. '

6. Structure multicouche selon l'une quelconque des revendications précédentes, **caractérisée en ce qu'**il est prévu comme polymère usinable de manière thermoplastique des élastomères thermoplastiques, de préférence du polyuréthane thermoplastique (TPU) ou des mélanges contenant comme composant prédominant du polyuréthane thermoplastique (TPU), ou des thermoplastiques, de préférence du polypropylène, du polyéthylène, du polyamide, du chlorure de polyvinyle, du polythéréphtalate d'éthylène ou des mélanges de ceux-ci.
